(19) Europäisches Patentamt
European Patent Office
Office européen des brevets

(11) **EP 2 985 600 B1**

(12) **EUROPEAN PATENT SPECIFICATION**

(45) Date of publication and mention
of the grant of the patent:
**04.04.2018 Bulletin 2018/14**

(21) Application number: **13881714.3**

(22) Date of filing: **12.04.2013**

(51) Int Cl.:
**G01N 29/44** *(2006.01)*    **G01N 29/06** *(2006.01)*
**G01N 29/265** *(2006.01)*    **G01N 29/07** *(2006.01)*

(86) International application number:
**PCT/JP2013/061006**

(87) International publication number:
**WO 2014/167698 (16.10.2014 Gazette 2014/42)**

(54) **ULTRASOUND EXAMINATION METHOD AND DEVICE**

ULTRASCHALLUNTERSUCHUNGSVERFAHREN UND -VORRICHTUNG

PROCÉDÉ ET DISPOSITIF D'EXAMEN PAR ULTRASONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2016 Bulletin 2016/07**

(73) Proprietor: **Hitachi, Ltd.**
**Chiyoda-ku**
**Tokyo 100-8280 (JP)**

(72) Inventors:
 • **MIZOTA, Hirohisa**
  **Tokyo 100-8280 (JP)**
 • **NAGASHIMA, Yoshiaki**
  **Tokyo 100-8280 (JP)**
 • **NAKAHATA, Kazuyuki**
  **Matsuyama-shi, Ehime 790-8577 (JP)**

(74) Representative: **MERH-IP Matias Erny Reichl
Hoffmann**
**Patentanwälte PartG mbB**
**Paul-Heyse-Strasse 29**
**80336 München (DE)**

(56) References cited:
**JP-A- H08 282 587**

• LEUTENEGGER T ET AL: "Non-destructive
testing of tubes using a time reverse numerical
simulation (TRNS) method", ULTRASONICS, IPC
SCIENCE AND TECHNOLOGY PRESS LTD.
GUILDFORD, GB, vol. 41, no. 10, 1 May 2004
(2004-05-01), pages 811-822, XP004505105, ISSN:
0041-624X, DOI: 10.1016/J.ULTRAS.2003.12.046
• GLIOZZI ANTONIO ET AL: "Efficiency of
time-reversed acoustics for nonlinear damage
detection in solids", THE JOURNAL OF THE
ACOUSTICAL SOCIETY OF AMERICA,
AMERICAN INSTITUTE OF PHYSICS FOR THE
ACOUSTICAL SOCIETY OF AMERICA, NEW
YORK, NY, US, vol. 120, no. 5, 1 January 2006
(2006-01-01), pages 2506-2517, XP012090765,
ISSN: 0001-4966, DOI: 10.1121/1.2345955
• KAZUYUKI NAKAHATA ET AL.: 'An Approach of
Ultrasonic Flaw Imaging in Solid with the Time
Reversal Method Assisted by an Image-based
Simulation' TECHNICAL REPORT OF IEICE June
2011, pages 1 - 6, XP008180937

EP 2 985 600 B1

**Description**

FIELD OF THE INVENTION

The present invention relates to an ultrasound inspection method and device. In particular, the invention relates to an ultrasound inspection method and device suitable for inspecting an inhomogeneous object or acoustically anisotropic object whose defect evaluation is believed to be difficult.

BACKGROUND OF THE INVENTION

Ultrasound inspection is being used as one of typical nondestructive testing methods for evaluating the soundness of structures. Ultrasound inspection is an inspection method including transmitting ultrasonic waves by applying voltages to piezoelectric elements (hereafter referred to as "elements") having electromechanical energy conversion efficiency included in an ultrasonic sensor, propagating the vibration thereof through the inspection object, converting the vibration of some reflected waves of the ultrasonic waves into voltages again using the properties of the ultrasonic waves in which the ultrasonic waves are reflected by the boundary surface of a substance or the like, and recording, graphing, or imaging the voltages. The applications of phased array (hereafter referred to as "PA") and synthetic aperture (hereafter referred to as "SA"), which are ultrasound inspection methods, have been increased in recent years.

PA is a method that allows focused ultrasonic beams to scan by controlling the timing (delay) of pulse voltages applied to excite elements arranged in an ultrasonic probe and thus visualizes multiple reflection sources. This method has a high SN ratio owing to the strong focused ultrasound. Further, it can quickly form an image since it does not involve complicated waveform processing. However, a PS device has to include a delay circuit or many amplifiers, as well as is costly and less portable.

SA is a method including transmitting wide beams by electronic scanning using some elements arranged in an ultrasonic sensor, receiving the ultrasonic waves through many paths by receiving them with all the elements, sampling the waveforms of the ultrasonic waves, then obtaining an oval object in which a wave source can exist, for each waveform, and superimposing amplitude values on the oval objects and thus imaging multiple reflection sources, as in PA. An SA device does not have to include a delay circuit or many amplifiers unlike a PA device, since it processes the recorded waveforms using a PC. That is, an SA device has good portability. However, an SA device has a low SN ratio, since it typically uses ultrasonic waves with low directivity. Further, an SA device requires an idea for speedup, since it involves complicated waveform processing.

Both methods form images assuming that the sonic speed of ultrasound or the energy propagation direction is almost constant. Accordingly, when inspecting a homogeneous, isotropic material, the reflection source position on the image and the actual reflection source position accurately agree with each other. On the other hand, when inspecting an acoustically anisotropic material (hereafter simply referred to as an "anisotropic material") generated by columnar-crystallizing a temporarily melted metal, the ultrasonic speed or energy propagation direction varies. Accordingly, a difference occurs between the reflection source position on the image outputted assuming that the material is isotropic and the actual reflection source position, that is, the measurement accuracy is reduced.

Countermeasures include inspection methods of physically focusing ultrasound by controlling the timing at which electric pulses are provided to elements, as in PA. Among such methods, there is known a method including previously modeling the properties of an anisotropic material using theoretical values, literature values, sectional measurement or the like, obtaining a propagation path or propagation time on the created model using the ray-trace method, and creating an accurate inspection result image (Non-Patent Document 1).

There are also methods including processing waveform data measured using a waveform sampling technique and superimposing the waveform intensity on a plane or space, as in SA. As one of such methods, there has been developed a method previously modeling the properties of an anisotropic material using theoretical values, literature values, sectional measurement or the like, assigning waveform intensity information to an appropriate position for each waveform, and stacking these intensities and thus creating an accurate inspection result image (Patent Document 1).

Further, there has been known in recent years a method including extracting a necessary waveform from waveforms recorded using the full-waveform sampling and processing technique, processing the extracted waveform, time-reversing the processed waveform to create loading conditions, and imaging defects by conducting a numerical analysis. Hereafter, a method including time-reversing waveforms and recreating an image by conducting a numerical analysis will be referred to as a "time-reversal propagation analysis". The elastodynamic finite integration technique, the finite element method or the like can be used as a numerical analysis algorithm. Use of a time-reversal propagation analysis is advantageous in that defects can be accurately evaluated even in a complicated inspection object by conducting a time-reversal propagation analysis on a model (analysis region) including property information of the inspection object (Non-Patent Document 2).

Among examples in which time reversal is used for purposes other than simulation include high-accuracy ultrasound inspection methods including transmitting and receiving ultrasonic waves, time-reversing and processing the received waveforms, providing pulse voltage patterns created from the resulting information to elements again, and repeatedly these steps (Non-Patent Documents 3 and 4).

DOCUMENTS ON RELATED ARTS

PATENT DOCUMENTS

Patent Document 1: US 6719693

NON-PATENT DOCUMENTS

Non-Patent Document 1: S. Pudovikov, A. Bulavinov, M. Kroning, "Ultrasonic inspectability of austenitic stainless steel and dissimilar metal weld joints."
Non-Patent Document 2: Kazuyuki Nakahata and Kazushi Kimoto, "An approach of ultrasonic flaw imaging in heterogeneous material with array transducer," 60th National Congress of Theoretical and Applied Mechanics, March, 2011.
Non-Patent Document 3: Mathias Fink, "Time Reversal of Ultrasonic Fields-Part I: Basic Principles," IEEE TRANSACTIONS ON ULTRASONICS, FERROELECTRICS, AND FREQUENCY CONTROL, VOL. 39, NO.5, SEPTEMBER 1992.
Non-Patent Document 4: Najet Chakroun, Mathias A. Fink, and Francois Wu, "Time Reversal Processing in Ultrasonic Nondestructive Testing," IEEE TRANSACTIONS ON ULTRASONICS, FERROELECTRICS, AND FREQUENCY CONTROL, VOL. 42, NO.6, NOVEMBER 1995.
Non-Patent Document 5: T. Leutenegger et all, "Nondestructive testing of tubes using a time reverse numerical simulation (TRNS) method" discloses a method for the detection of defects in cylindrical structures and the determination of their positions and orientations.
Furthermore, Non-Patent Document 6: A. Gliozzi et all, "Efficiency of time-reversed acoustics for nonlinear damage detection in solids" dicloses an approch based on the filtering of the time signals, wherein the image of the scatterer is obtained through numerical simulations of the back propagation in a fictious reference specimen.

DISCLOSURE OF THE INVENTION

PROBLEMS TO BE SOLVED BY THE INVENTION

Inspecting an inhomogeneous, acoustically anisotropic area, such as a weld, by scanning the area with a sensor and outputting an accurate inspection image require an enormously long inspection time including a preparation time.
In PA, each time the mounting position of the sensor and the acoustically anisotropic area are displaced relative to each other, the propagation path or propagation time varies. Accordingly, it is necessary to previously prepare all-in-focus delay time patterns set in respective measurement points and to read the delay times when required to create an image. This disadvantageously makes the inspection time enormously long.
Similarly, when inspecting an acoustically anisotropic area by scanning the area with a sensor using SA or the method described in Patent Document 1 or Non-Patent Document 1, the propagation path or propagation time varies each time the area and the mounting position of the sensor are displaced relative to each other. Accordingly, it is necessary to previously prepare propagation time simulations (reverse phase matching) of all pixels of an output image at respective measurement points and to create an image when required. This approach also disadvantageously requires an enormously long inspection time.
The high-accuracy imaging technology using a time-reversal propagation analysis described in Non-Patent Document 2 conducts analyses sequentially to recreate an image, assuming that defect positions and the properties of the inspection object are roughly known. Thus, this technology disadvantageously cannot output an accurate image immediately.
The high-accuracy imaging technologies using time reversal described in Non-Patent Documents 3 and 4 may diverge by repeatedly transmitting or receiving ultrasonic waves. Thus, these technologies disadvantageously cannot conduct an accurate inspection.
In view of the foregoing, an object of the present invention is to provide an ultrasound inspection method and device according to claim 1 and claim 9, respectively, that can detect defect positions accurately and reduce the inspection time even when inspecting an inhomogeneous, acoustically anisotropic material.

MEANS FOR SOLVING THE PROBLEM

To solve the above problems, an ultrasound inspection method according to the present invention includes a step of creating a first flaw detection-image from recorded ultrasonic waveforms, a step of creating a time-reversal propagation analysis model including loading conditions obtained from the recorded ultrasonic waveforms, and a step of creating a second flaw detection image from a result obtained by conducting a time-reversal propagation analysis on the time-reversal propagation analysis model.

ADVANTAGEOUS EFFECTS OF THE INVENTION

According to the present invention, it is possible to provide an ultrasound inspection method and device that can detect defect positions accurately and reduce the inspection time even when inspecting an inhomogeneous, acoustically anisotropic material.

BRIEF DESCRIPTION OF DRAWINGS

Figure 1 is a configuration diagram of an inspection device using a numerical analysis algorithm;
Figure 2 is a flow diagram showing an inspection method using the inspection device using the numerical analysis algorithm;
Figure 3 is an auxiliary view showing the inspection method;
Figure 4 is a configuration diagram of an inspection device which switches between numerical analysis algorithms;
Figure 5 is a flow diagram showing an inspection method using the inspection device which switches between numerical analysis algorithms;
Figure 6 is a configuration diagram of an inspection device of the present invention which also uses synthetic aperture processing;
Figure 7 is a flow diagram showing an inspection method using the inspection device of the present invention which also uses synthetic aperture processing;
Figure 8 is a flow diagram showing an inspection method using the present invention;
Figure 9 is a flow diagram showing a model creation method;
Figure 10 is a conceptual diagram of the creation of a model;
Figure 11 is a flow diagram showing a method for creating a detailed model;
Fig. 12 is a conceptual diagram of the creation of a detailed model;
Figure 13 is a diagram showing a welding boundary;
Figure 14 is a diagram showing a method for synthesizing surface waves;
Figure 15 is a diagram showing loading conditions; and
Figure 16 is a diagram showing a time-reversal propagation analysis.

DESCRIPTION OF THE PREFERRED EMBODIMENT

Now, embodiments of the present invention will be described with reference to the drawings.

FIRST EMBODIMENT

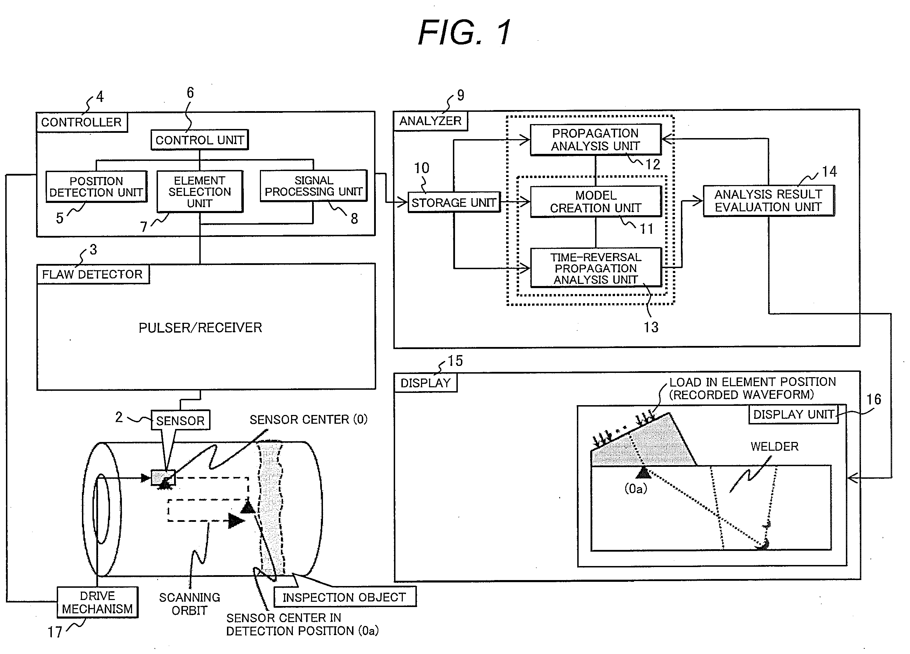

Figure 1 shows an ultrasound inspection device 1 of the present invention. The ultrasound inspection device 1 includes four basic components: a sensor 2, a flaw detector 3, a controller 4, an analyzer 9 (PC), and a display 15. An array probe is used as the sensor 2 that transmits ultrasonic waves. Under the control of the controller 4, the flaw detector 3 selectively provides pulse voltages to elements of the array probe so that ultrasonic waves can be transmitted, and selectively receives reflected waves so that waveform data can be recorded.

The flaw detector 3 includes a pulser/receiver. The flaw detector 3 receives a signal from the controller 4 and provides a voltage to the sensor to transmit ultrasonic waves, and converts ultrasonic waves received by the sensor into voltages and receives the voltages.

The controller 4 includes a position detection unit 5 for acquiring position information of the sensor from a drive mechanism 17. The controller 4 also includes an element selection unit 7 that selects an element to be used based on a signal from a control unit 6 and a signal processing unit 8 that transmits a received signal to the analyzer 9.

The analyzer 9 includes a storage unit 10, a model creation unit 11, a propagation analysis unit 12, a time-reversal propagation analysis unit 13, and an analysis result evaluation unit 14. In the present embodiment, there will be described a case in which the storage unit 10 stores only a single numerical analysis algorithm.

The storage unit 10 stores the numerical analysis algorithm, as well as recorded waveform data, the positions of the sensor 2 and elements, a contact medium between the elements and inspection object, such as a wedge (shoe) or water, the shape of the inspection object, and material data of the inspection object (density, stiffness coefficient, particle diameter or the like). The stored numerical analysis algorithm is one of various types of algorithms that can handle wave equations, such as the finite integration technique and finite element method.

The model creation unit 11 has a function of defining a required analysis region when numerically analyzing an ultrasonic propagation phenomenon. Specifically, the model creation unit 11 has a function of creating boundary conditions using, as input information, the sensor structure, a contact medium such as a wedge, and the shape and properties of the inspection object or the like in order to define an analysis region and dividing the analysis region into meshes. It also has a function of processing input waveforms to create loading conditions.

The propagation analysis unit 12 has, for example, a function of conducting a propagation analysis using a model obtained by providing a wave source (loading conditions) on the analysis region created by the model creation unit to obtain the time taken until the wave source reaches the element position. There are various types of example processing algorithms. The propagation analysis unit 12 conducts a propagation analysis using the numerical analysis algorithm stored in the storage unit 10.

The time-reversal propagation analysis unit 13 has, for example, a function of performing a numerical calculation on the model created by the model creation unit 11 using the recorded waveforms as the loading conditions. Examples of an algorithm for performing this numerical calculation include various algorithms that can handle wave equations, such as the finite integration technique and finite element method. The time-reversal propagation analysis unit 13 conducts a propagation analysis using the numerical analysis algorithm stored in the storage unit 10. Among others, the finite element method algorithm is suitable for inspecting an inhomogeneous, anisotropic inspection object.

The analysis result evaluation unit 14 has a function of evaluating an image recreated based on the time-reversal propagation analysis and determining whether any reflection source exists in a site having no reflection source when the inspection object is sound.

A display unit 16 of the display 15 shows the analysis result.

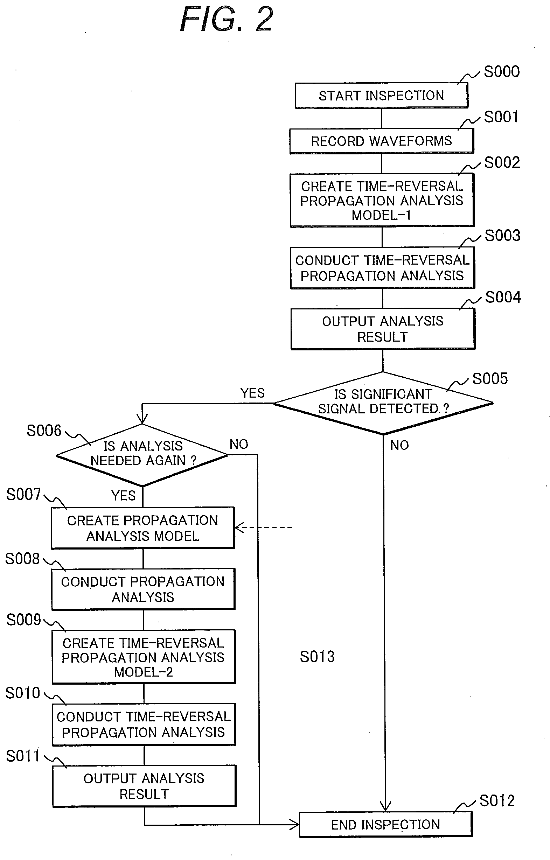

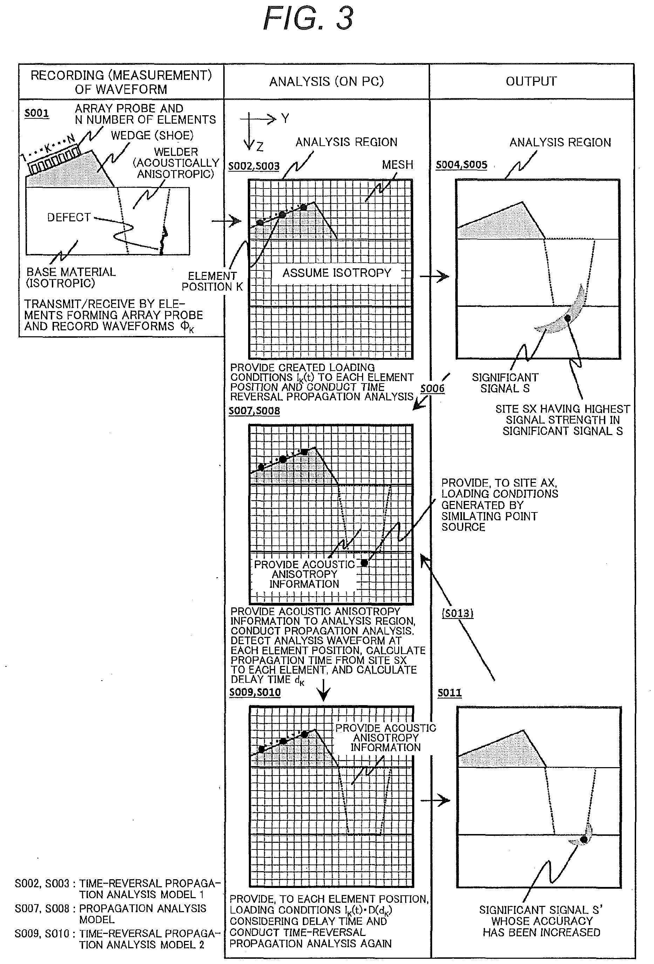

A method for suitably conducting an inspection using the device configuration in Figure 1 will be described with reference to Figures 2 and 3. For simplicity, it is assumed that the sensor 2 is fixed on the inspection object.

In S000, an inspection is started.

In S001, waveforms are recorded. It is assumed that the recording time of a waveform (the entire length of the waveform) is represented by T; the number of elements forming the array probe is represented by N; and the elements are numbered 1 to N. If the full-waveform sampling and processing technique is used, an element numbered J ($1 \leq J \leq N$) transmits an ultrasonic wave, and an element numbered K ($1 \leq K \leq N$) receives the ultrasonic wave. Accordingly, waveforms corresponding to all $N \times N$ combinations of the element numbers (J, K) are recorded. The recorded waveforms are each represented by $\varphi_{JK}(t)$. If a sampling technique as used in SA is used, all the N elements simultaneously transmit ultrasonic waves, which are then received by the respective elements and thus N number of waveforms are recorded. The recorded waveforms are each represented by $\varphi_K(t)$. The waveforms may be recorded using the full-waveform sampling and processing technique or may be recorded using any sampling technique. For example, waveforms recorded using a sampling technique can be synthesized from waveforms recorded using the full-waveform sampling and processing technique. This is because both types of waveforms have a relationship represented by Equation 1:

$$\varphi_K(t) = \Sigma_{1 \leq J \leq N} \varphi_{JK}(t)$$

For example, if the array probe includes three elements, a waveform recorded using a sampling technique and a waveform recorded using the full-waveform sampling and processing technique are both represented by $\varphi_1 = \varphi_{11} + \varphi_{21} + \varphi_{31}$. The full-waveform sampling and processing technique handles a larger amount of information than any sampling technique and therefore is of course characterized in that it has a higher degree of freedom in processing a waveform. Hereafter, description will be made for an example using waveforms recorded using a sampling technique for simplicity.

In S002, there is created an analysis region on which a time-reversal propagation analysis is conducted using the sensor specification, wedge specification, inspection object specification or the like previously inputted in the storage unit 10 and using the recorded waveforms as loading information. The created analysis region is defined as a time-reversal propagation analysis model. The loading information here is generated by time-inverting the waveforms recorded in S001 and represented by Equation 2:

$$I_K(t) = \alpha \cdot \varphi_K(T - t)$$

In Equation 2, $\alpha$ is, for example, a constant for dividing the element area into the meshes of the analysis region and using the meshes as loading conditions, or a weighting constant which is commonly used in imaging technologies using radar or ultrasound and varies with the element position K. The generated loading information $I_K(t)$ is provided to analysis regions corresponding to respective element positions. The analysis regions are created by creating boundary conditions from the material, shape or the like of the wedge or inspection object, determining analysis regions, and dividing the analysis regions into meshes. In this stage, analysis regions are set without considering the welding boundary or acoustic anisotropy of the weld of the inspection object but rather assuming that the weld is acoustically isotropic.

In S003, a time-reversal propagation analysis is conducted using the created time-reversal propagation analysis model in accordance with the numerical analysis algorithm stored in the storage unit 10.

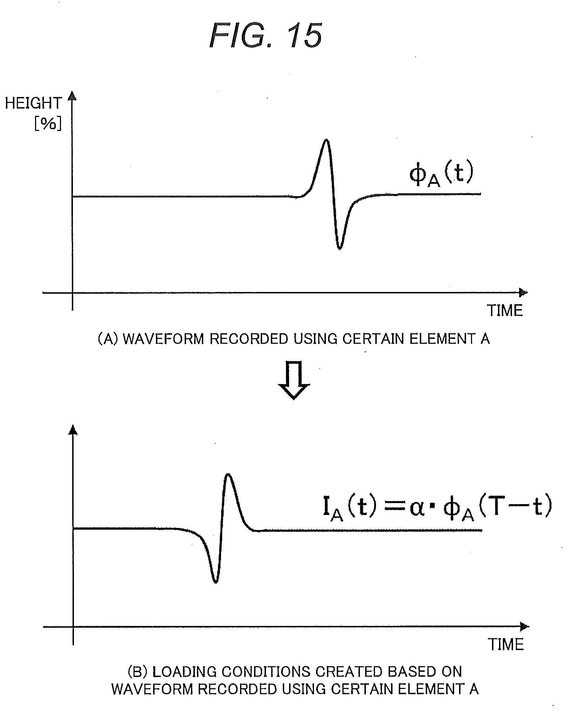

The loading conditions and time-reversal propagation analysis will be described in detail below. The loading conditions will be described with reference to Figure 15. It is assumed that a certain element A has recorded a waveform $\varphi A(t)$. The recorded waveform is time-reversed, and a constant $\alpha$ is included. Thus, loading conditions are obtained. The time-reversal propagation analysis is conducted assuming that the obtained loading conditions IA(t) have been provided to the element which has recorded the waveform $\varphi A(t)$.

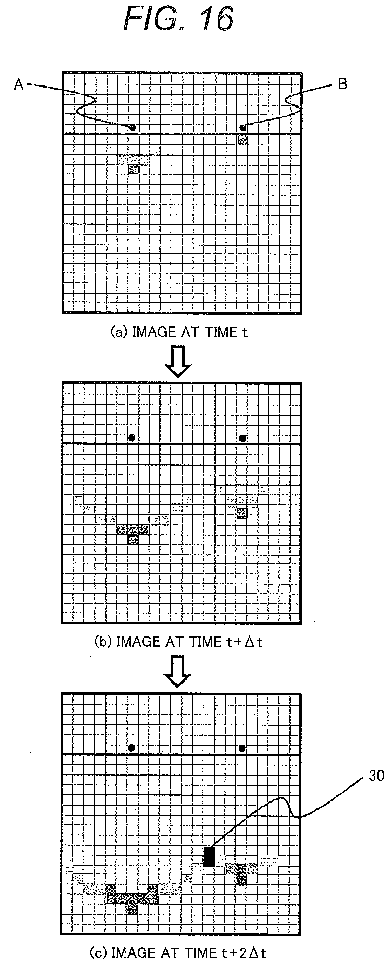

Referring to Figure 16, the time-reversal propagation analysis will be described in detail. The loading conditions obtained in Figure 15 are obtained with respect to each element, and the propagation state of ultrasound when the loading conditions are provided to the respective elements is numerically analyzed using the numerical analysis algorithm stored in the storage unit 10. As a result, the propagation state is represented as an image as shown in Figure 16. Figure 16(a) shows the propagation state at a certain time t. When the loading information IA(t) is provided to the element A, a waveform centered on the element A as shown in Figure 16(a) is propagated at the certain time t. The analyzed information reflects propagation in an actual inspection more faithfully.

Subsequently, when a time $\Delta t$ (=t+$\Delta t$) passes, the waveform is propagated and an image as shown in Figure 16(b) is created. In Figure 16(b), it is understood that another waveform is propagated from an element B. The waveform inputted by the element B is loading conditions $I_B(t)$ obtained from a waveform observed by the element B. Subsequently, when a time $2\Delta t$(=t+$2\Delta t$) passes, a waveform as shown in Figure 16(c) is propagated. At this time, the waveforms propagated from the elements A and B overlap each other in an area A 30, and the waveform as an image becomes dense. Note that while each waveform is processed by the analyzer, the height (amplitude) of the waveform is divided into multiple levels and the levels are represented by light and shade on an image.

The above processes are performed with respect to all the elements during a waveform recording time T. Thus, defects in the inspection object can be finally imaged. These processes are performed by the analyzer 9 without actually inputting waveforms to the elements. Note that if any positional relationship in which a defect is more likely to occur is previously known, the processes may be performed during only a required part of the waveform recording time T rather than during the entire time T.

In S004, the analysis result (e.g., image) is outputted.

In S005, the analysis result is evaluated as to whether a significant signal S has been detected. If any significant signal S has been detected, step S006 is performed.

In S006, it is determined whether an analysis has to be conducted again. If it is determined that an analysis has to be conducted again, step S007 is performed.

In S007, if the inspection object is acoustically anisotropic, an analysis region including acoustic anisotropy information is created. Further, for example, loading conditions obtained by simulating a point source are provided to a site SX in the significant signal S in S005. The site SX to which the loading conditions obtained by the simulating a point source is provided is, for example, a site having the highest signal strength in the significant signal S.

In S008, a propagation analysis is conducted to obtain the respective propagation times to respective element positions from the site SX to which the loading conditions obtained by simulating the point source are provided. The obtained propagation times are propagation times including information about the acoustic anisotropy of the inspection object. For example, each propagation time includes the differences in ultrasonic propagation speed among the contact medium, wedge, base material, and weld. Note that in Figure 3, the significant signal S is shown outside the inspection object. For this reason, acoustic anisotropy information of the base material or acoustic anisotropy information of the closest area is provided as acoustic anisotropy information.

In S009, delay times dk are calculated from the propagation times obtained in S008. For example, the propagation time from the site SX obtained by simulating the point source to the most distant element position, that is, the element position to which a waveform is propagated with a longest propagation time is defined as a reference propagation time, and the difference between the reference propagation time and the propagation time taken until a waveform is propagated from the site SX to each element position is defined as the delay time of each element position. New loading conditions $I_K(t) \cdot D(dk)$ are created using the delay times dk which have calculated the loading conditions created in S009. The function D is defined as a function which provides a delay time.

In S010, the loading conditions $I_K(t) \cdot D(d_k)$ are provided to each element position on the analysis region including the properties of the inspection object, and a time-reversal propagation analysis is conducted according to the numerical analysis algorithm stored in the storage unit 10. This time-reversal propagation analysis differs from that in S003 in that the delay time $D(d_k)$ is included.

In S011, the analysis result is outputted. In S012, the inspection is ended. As shown in Fig 3, defects are accurately shown in correct positions by including the detailed information of the inspection object and the delay times unlike when a defect detection result is imaged through a time-reversal propagation analysis without including the delay times assuming that the inspection object is isotropic. A case is also conceivable in which the detailed information of the inspection object is included and the delay times are not included. In this case, a propagation analysis is not required, and the processing time is speeded up accordingly. Further, the accuracy is increased compared to when the delay times are not included and the inspection object is assumed to be isotropic. However, the accuracy is reduced slightly compared to when the detailed information of the inspection object and the delay times are included, since any focusing effect is not obtained.

If no significant signal exists in S005 or if it is determined in S006 that an analysis need not be conducted again, the inspection is ended in S012. Further, by returning to S007 as S013 in Figure 2 after outputting the analysis result in S011, it is possible to address a case in which multiple significant signals have been detected or a case in which there is a desire to further increase the accuracy of the image.

By performing these steps, an accurate defect detection result considering the acoustic anisotropy can be obtained. Thus, defect positions can be obtained accurately. By using both the coarse imaging result in S005, which is quick but less accurate, and the accurate inspection in S010, defect positions can be inspected accurately and quickly.

SECOND EMBODIMENT

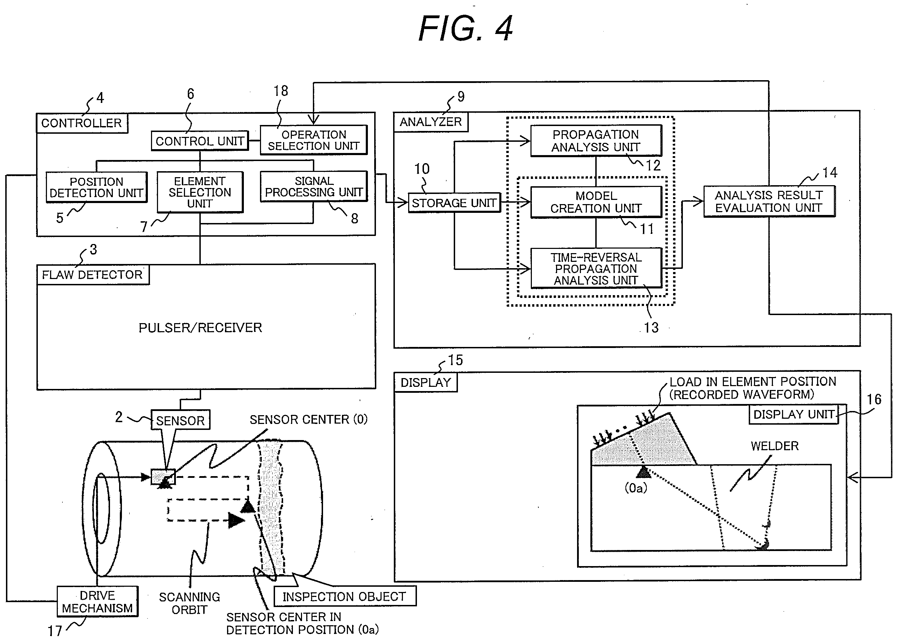

Figure 4 shows a device configuration when a storage unit 10 stores two or more numerical analysis algorithms. Among numerical analysis algorithms are an algorithm that can quickly conduct an analysis on a model created assuming that the inspection object is isotropic, but has difficulty in quickly conducting an analysis on a model created assuming that the inspection object is an acoustically anisotropic, an algorithm that can conduct an analysis whether the inspection object is isotropic or anisotropic, but is relatively slow in analysis speed, an algorithm that can handle a wave phenomenon, and an algorithm that cannot handle a wave phenomenon. For this reason, the device configuration in Figure 4 includes the units in Figure 1 as well as an operation selection unit 18 that allows an analysis result evaluation unit 14 to switch between the two or more numerical analysis algorithms stored in the storage unit 10 and then to conduct a numerical analysis. The operation selection unit 18 is included in a controller 4.

Examples of an algorithm that can quickly conduct an analysis on a model created assuming that the inspection object is isotropic include the elastodynamic finite integration technique; examples of an algorithm that can conduct an analysis whether the inspection object is isotropic or acoustically anisotropic include the finite element method. The elastodynamic finite integration technique and finite element method solve a wave equation and therefore can handle a wave phenomenon. On the other hand, examples of an algorithm that cannot handle a wave phenomenon include the ray-trace method, which obtains a geometrical-optical propagation path so that the propagation time or delay time can be calculated.

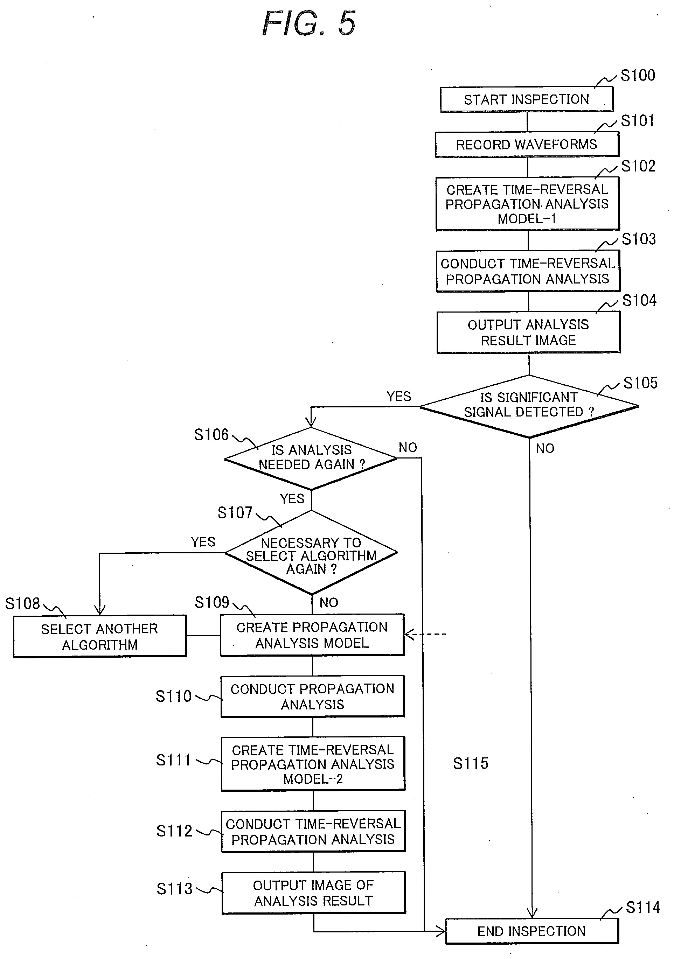

Figure 5 shows a method for suitably conducting an inspection using the device configuration in Figure 4. For simplicity, it is assumed that the sensor is fixed on the inspection object.

S100 to S102 are the same as S000 to S002. In S103, a time-reversal propagation analysis is conducted on a created time-reversal propagation analysis model in accordance with a numerical analysis algorithm stored in the storage unit 10 (hereafter, the algorithm that conducts a time-reversal propagation analysis will be referred to as the algorithm A").

S104 to S106 are the same as S004 to S006. If it is determined in S106 that an analysis has to be conducted again, it is determined in S107 whether it is necessary to change the algorithm A to another algorithm, for example, an algorithm B that can analyze an anisotropic material. Thus, the device can be improved by only storing a newly developed numerical analysis algorithm in the storage unit 10. For example, if the algorithm A can quickly analyze an isotropic material but has difficulty in analyzing an anisotropic material, it is determined in S107 that an algorithm has to be selected again, and another algorithm B that can analyze an anisotropic material is selected in S108.

In S109, loading conditions obtained by simulating a point source are provided to a site SX of a signal detected in S105, as in S008.

In S110, a propagation analysis is conducted in accordance with the algorithm B to obtain the propagation times from the position to which the loading conditions obtained by simulating the point source are provided, to respective element positions.

In S111, delay times $d_k$ are calculated from the obtained propagation times. New loading conditions $l_k(t)$. $D(d_k)$ are created using the delay times $d_k$ that have calculated the loading conditions created in S002. The created new loading conditions are provided to the respective element positions.

In S112, a time-reversal propagation analysis is conducted on an analysis region including the properties of the inspection object in accordance with the algorithm B.

In S113, the analysis result is outputted; in S114, the inspection is ended.

If no significant signal exists in S105 or if it is determined in S106 that an analysis need not be conducted again, the inspection is ended in S114. By returning to S109 as S115 in Figure 5 after outputting the analysis result in S113, it is possible to address a case in which multiple significant signals have been detected or a case in which there is a desire to further increase the accuracy of the image.

An algorithm C that is not the algorithm A or B may be substituted for the algorithm B used in the propagation analysis. For example, the elastodynamic finite integration technique may be used as the algorithm A; the finite element method as the algorithm B; and the ray-trace method as the algorithm C. If the ray-trace method is selected, the delay times are calculated by obtaining the geometrical-optical propagation times from the site SX serving as the start point to the respective elements using the ray-trace method.

In the second embodiment, the storage unit 10 includes multiple algorithms. Thus, the inspection object can be inspected quickly and accurately by selecting an algorithm most suitable for the material of the inspection object.

THIRD EMBODIMENT

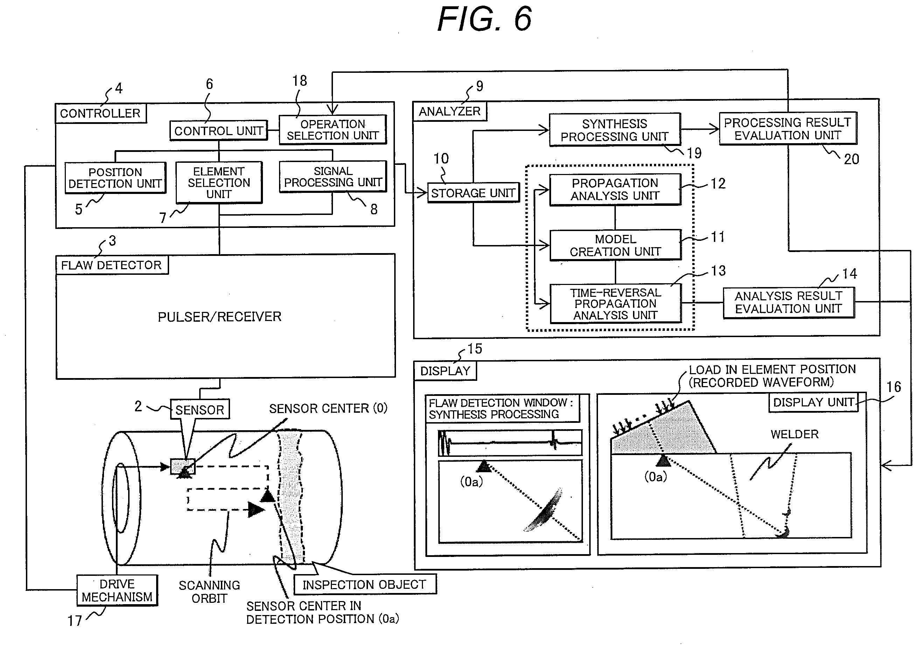

Figure 6 shows a device configuration which includes the units shown in Figure 1 or 4, as well as a synthesis processing unit 19 that performs synthetic aperture processing in accordance with a synthesis processing algorithm stored in a storage unit 10, and a processing result evaluation unit 20 for evaluating the result of the synthetic aperture processing. Assuming that the inspection object is an isotropic material, an image can be created quickly by performing synthetic aperture processing.

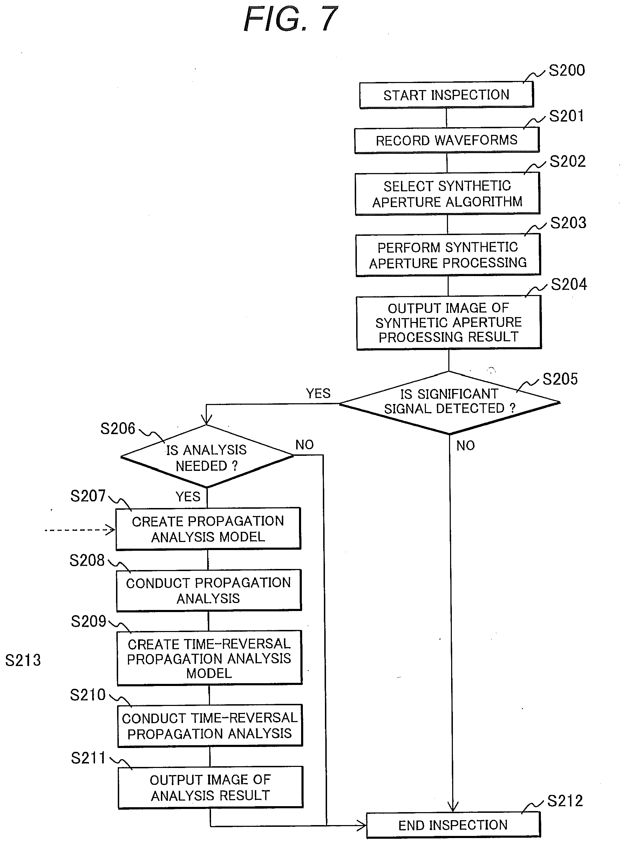

Figure 7 shows a method for suitably conducting an inspection using the device configuration in Figure 6. For simplicity, it is assumed that a sensor 2 is fixed on the inspection object.

S200 and S201 are the same as S000 and S001. In S202, an operation selection unit 18 selects the synthetic aperture algorithm in the storage unit 10.

In S203, synthetic aperture processing is performed on recorded waveforms.

In S204, for example, an image is outputted as the result of the synthetic aperture processing. In S205, the processing result evaluation unit 20 makes an evaluation as to whether a significant signal S has been detected. If a significant signal S has been detected, it is determined in S206 whether an analysis has to be conducted. If it is determined that an analysis has to be conducted, the operation selection unit 18 selects a numerical analysis algorithm in the storage unit. In S207, loading conditions obtained by simulating a point source are assigned to a site SX of the signal detected in S205, as in S008. Subsequent S208 to S212 are the same as S008 to S012.

If no significant signal S exists in S205 or if it is determined in S206 that an analysis need not be conducted again, the inspection is ended in S212. Further, by returning to S207 as S213 after outputting the analysis result in S211, it is possible to address a case in which multiple significant signals have been detected or a case in which there is a desire to further increase the accuracy of the image.

In the present embodiment, assuming that the inspection object is an isotropic material, an image can be created quickly by performing synthetic aperture processing.

FOURTH EMBODIMENT

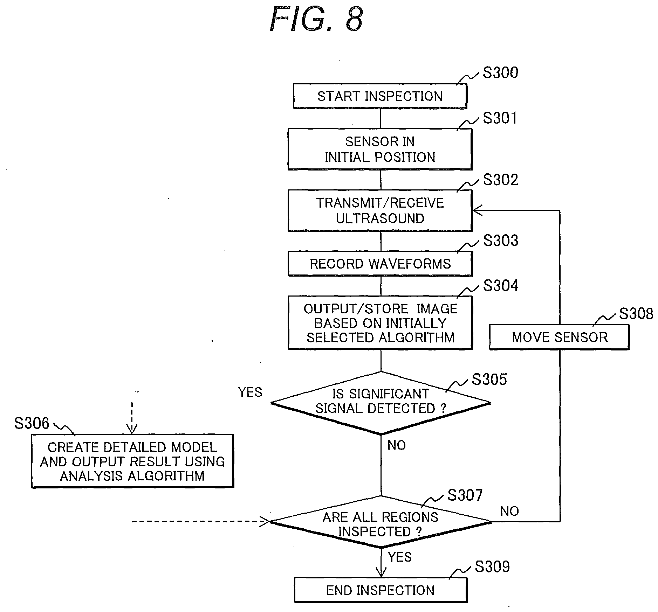

The above description has been made assuming that the sensor is fixed for simplicity. However, the sensor is often moved on the inspection object in an actual ultrasound inspection. Figure 8 shows the flow of an inspection conducted while moving a sensor.

In S300, the sensor is placed on the inspection object and then an inspection is started.

In S301, the sensor is located in the initial position.

In S302, the sensor starts to transmit and receive ultrasonic waves in accordance with a command from the controller. In S303, which corresponds to S001, S101, and S201, waveforms are recorded.

In S304, which corresponds to S004, S104, and S204, an image is outputted.

In S305, it is determined whether no significant signal exists on the image. If no significant signal exists, it is determined in S307 whether all regions to be inspected have been inspected. If all the regions have been inspected, the inspection is ended in S309.

If any significant signal exists in S305, in S306, which corresponds to S007-S011, S109-S113, and S207-S211, a numerical analysis is conducted on a model including detailed information about the inspection object, and an image is created. Step S306 can be performed whether during or after the inspection, as long as waveform data has been recorded in S303.

If all the regions have yet to be inspected in S307, the sensor is moved according to the scanning orbit or pitch thereof in accordance with a command from the controller in S308, and S302-307 are repeated until all the regions are inspected.

In the present embodiment, an inspection is conducted while moving the sensor on the inspection object. Thus, a wide inspection range can be covered.

FIFTH EMBODIMENT

In the first to fourth embodiments of the present invention, the significant signal S in Figure 3 is evaluated, and the loading conditions of the site SX or the start point SX of the ray-trace method are determined in a propagation analysis. Alternatively, if a defect is predicted to exist, the site in which the defect is predicted to exist may be defined as SX.

In the present embodiment, there is no need to determine the start point SX and therefore an inspection can be conducted more quickly.

SIXTH EMBODIMENT

It is required to create a simple and accurate model for carrying out the present invention while moving the sensor on the inspection object. To create such a model, detailed shape or material data of the inspection object, the scanning orbit or pitch of the sensor or the like is previously stored in the storage unit 10.

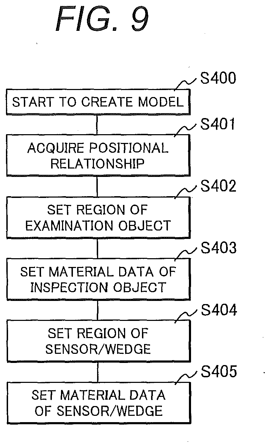

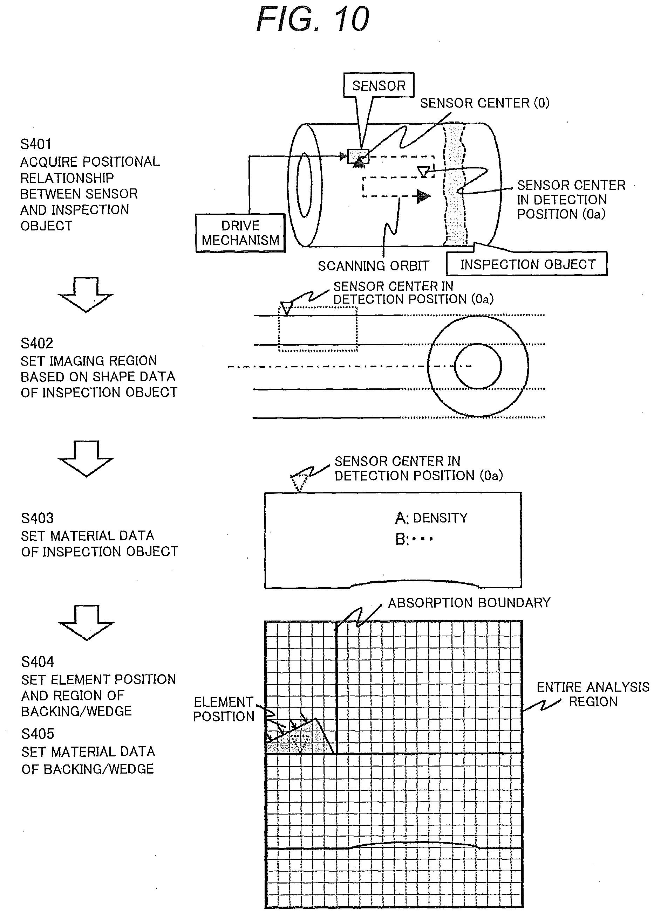

Figs. 9 and 10 show a method for creating a model when inspecting the inspection object assuming that it is an isotropic material.

In S400, the creation of a model is started. In S401, the positional relationship between the sensor element/wedge and the inspection object is acquired. In S402, a two-dimensional or three-dimensional region to be analyzed is set using shape data of the inspection object. In S403, material data of the inspection object is set for the region. In S404, an analysis region is set, for example, based on the element position to which loading conditions created from the recorded waveforms are provided, an analysis region considering backing (absorbing boundary) as the sensor structure, the shape of the wedge or the like. It is preferable, in S405, to provide material data of the bucking, wedge or the like and create a model.

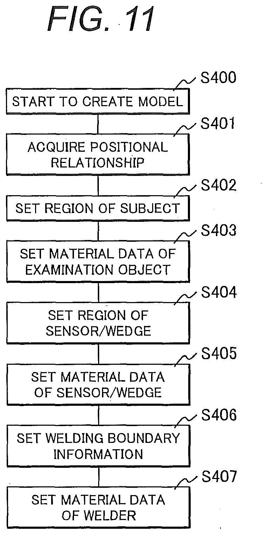

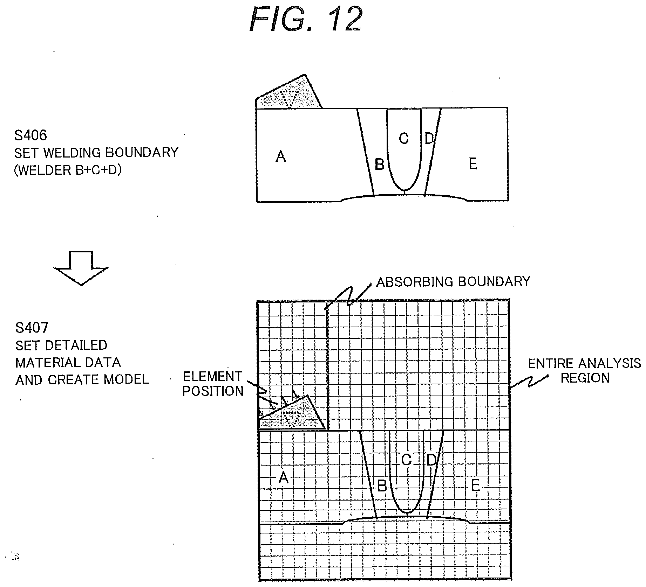

Next, referring to Figures 11 and 12, there will be described a method for creating a detailed model assuming that a weld or the like is inhomogeneous and acoustically anisotropic. S400-S405 are the same as those in Figure 9. Then, in S406, boundary information of the weld is set from the storage unit 10.

In S407, detailed material data of the weld is read from the storage unit 10 and provided. Thus, a weld-simulated model can be created.

Typically, when a temporarily melted metal is solidified, it is crystallized. For this reason, as the material data of the weld, it is preferred to store the average crystal growth direction of each position or region, or a stiffness coefficient or density corresponding to the type of the crystallized metal.

In the present embodiment, even when a model is not previously provided, a model can be created using a simple method. Thus, the versatility of the inspection object can be increased.

SEVENTH EMBODIMENT

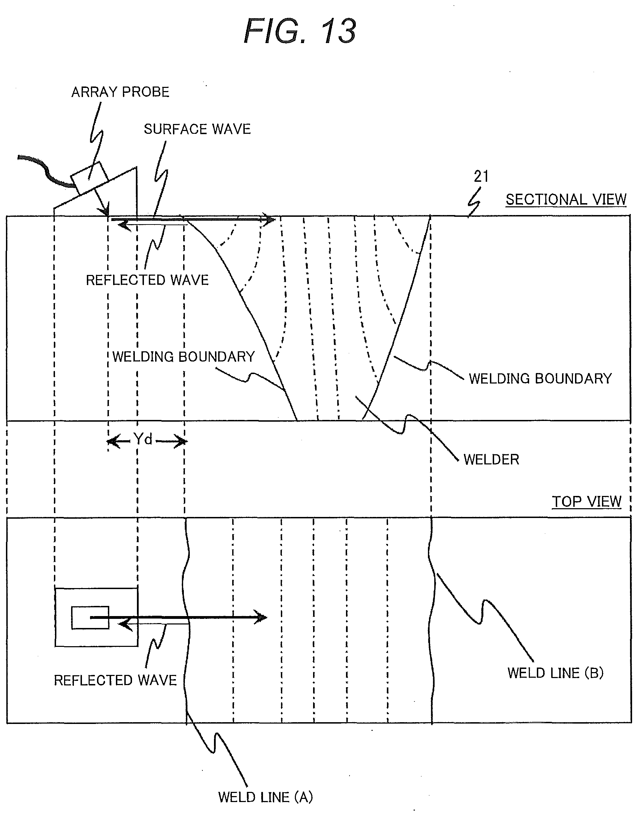

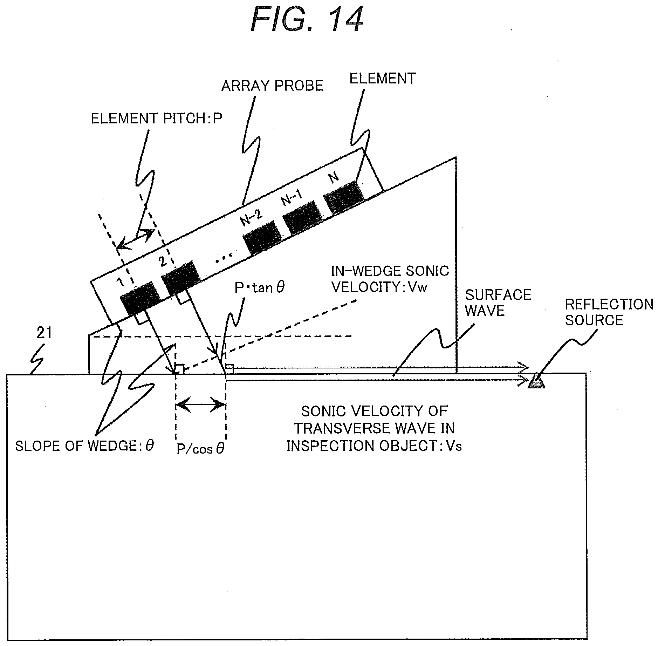

In the present embodiment, there will be described a case in which a weld is polished and therefore difficult to check visually or a case in which the accurate position of a weld is unknown. Referring to Figures 13 and 14, there will be described a method for setting boundary information of a weld when, in S406, the weld is difficult to check visually or the position of the weld is unknown.

To determine the welding boundary, it is preferred to provide the delay times to the waveforms recorded in S001, S101, and S102, to synthesize a waveform in such a manner that surface waves are emphasized, and to detect the weld line. To emphasize the surface waves, it is preferred to use waveforms recorded using the full-waveform sampling and processing technique. As shown in Figure 14, ultrasonic waves emitted from adjacent elements pass through a wedge, become surface waves on the inspection object surface, reach a reflection source, are reflected thereby, propagate from the inspection object surface again through the wedge, and reach the elements. In this case, a round-trip propagation time difference $D_L$ is represented by Equation 2:

$$D_L = 2P\left(\frac{1}{\alpha \cdot v_s \cdot \cos\theta} - \frac{\tan\theta}{v_W}\right).$$

In Equation 3, $\theta$ represents the slope of the wedge; $V_W$ represents the sonic velocity of longitudinal waves in the wedge; $V_S$ represents the sonic velocity of transverse waves in the inspection object; and $\alpha$ takes a value of 0.9 to 0.95 on the basis of the relationship between the sonic velocities of the transverse waves and surface waves. If no wedge is provided, 0 is assigned to $\theta$.

For example, using the time difference $D_L$, a delay time is assigned to a waveform $\varphi_{ii}(t)$ ($1 \leq i \leq N$) transmitted, received, and recorded by the same element, of the waveforms recorded by the full-waveform sampling and processing technique.

The synthesized waveform $\varphi_s$ represented by Equation 4:

$$\phi_s = \sum \phi_{ii}(t) \cdot D((i-1)d_k)$$

is a waveform in which surface wave components are emphasized. The positional relationship between a sensor 2 and the reflection source (weld line) on the inspection object surface 21 can be obtained from a signal from the reflection source which appears on the synthesized waveform $\varphi_s$. By creating a detailed model of the weld using the positional relationship information, boundary information of the weld can be set in S406, even when the weld is polished and therefore difficult to check visually or the accurate position of the weld is unknown.

EXPLANATION OF REFERENCE CHARACTERS

1    ultrasound inspection device,

2    sensor,

3    flaw detector,

4    controller,

5    position detection unit,

6    control unit,

7    element selection unit,

8    signal processing unit,

9    analyzer,

10   storage unit,

11   model creation unit,

12   propagation analysis unit,

13   time-reversal propagation analysis unit,

14   analysis result evaluation unit,

15   display,

16   display unit,

17   drive mechanism,

18   operation selection unit,

19   synthesis processing unit,

20   processing result evaluation unit,

21    inspection object surface,

30    area A.

## Claims

1. A method for inspecting an inspection object using ultrasonic waves, comprising:

    - a step (S004; S104; S204; S304) of creating a first flaw detection image from recorded ultrasonic waveforms;
    - a step (S005; S105; S205; S305) of detecting a significant reflected signal from the first flaw detection image;
    - a step (S008; S110; S208) of conducting a propagation analysis to obtain respective ultrasonic propagation times from the significant reflected signal to respective ultrasonic wave transmission positions;
    - a step of obtaining delay time information of the ultrasonic wave transmission positions from the propagation times;
    - a step (S009; S111; S209) of creating a time-reversal propagation analysis model for analyzing propagation of ultrasonic waves to the inspection object by using, as input, the delay times and waveforms obtained by time-reversing the recorded ultrasonic waveforms; and
    - a step (S011; S113; S211) of creating a second flaw detection image from a result obtained by conducting (S010; S112; S210) a time-reversal propagation analysis on the time-reversal propagation analysis model.

2. The method according to claim 1, wherein the step of creating the first image comprises:

    - a step (S002; S102) of creating a first time-reversal propagation analysis model for analyzing propagation of ultrasonic waves to the inspection object by using, as input, waveforms obtained by time-reversing the recorded ultrasonic waveforms; and
    - a step (S004; S104) of outputting a result obtained by conducting (S003; S103) a time-reversal propagation analysis on the first time-reversal propagation analysis model.

3. The method according to claim 1, wherein the step of creating the first image comprises:

    - a step of selecting a numerical analysis algorithm A;
    - a step (S102) of creating a time-reversal propagation analysis model for analyzing propagation of ultrasonic waves to the inspection object by using, as input, waveforms obtained by time-reversing the recorded waveforms; and
    - a step (S104) of outputting a result obtained by conducting a time-reversal propagation analysis by using the numerical analysis algorithm A on the time-reversal propagation analysis model, and wherein

    the step of conducting the propagation analysis comprises:

    - a step (S107, S108) in which a numerical analysis algorithm other than the numerical analysis algorithm A can be selected;
    - a step (S109) of creating a propagation analysis model for obtaining respective ultrasonic propagation times from the significant reflected signal to respective ultrasonic wave transmission positions; and
    - a step (S110) of conducting the propagation analysis by using the numerical analysis algorithm other than the numerical analysis algorithm A.

4. The method according to claim 1, wherein the step of creating the first flaw detection image comprises:

    - a step (S202) of selecting a synthetic aperture algorithm; and
    - a step (S204) of outputting a result obtained by performing (S203) synthetic aperture processing using the recorded waveforms.

5. The method according to any one of claims 1 to 4, wherein the significant reflected signal is a step of calculating propagation times from a previously assumed position to the respective element positions, the previously assumed position being a position from which significant reflection is previously assumed to be detected.

6. The method according to any one of claims 1 to 5, further comprising:

    - a step of creating a model, wherein the step of creating the model comprises:
    - a step (S401) of acquiring a positional relationship between the sensor and the inspection object;
    - a step (S402) of setting an analysis region of the inspection object;
    - a step (S403) of setting material data of the inspection object;
    - a step (S404) of setting a structure of the sensor and an analysis region of a wedge; and
    - a step (S405) of setting a structure of the sensor and material data of the wedge.

7. The method according to claim 6, wherein the step of creating the model comprises:

- a step (S406) of setting welding boundary information; and
- a step (S407) of setting material data of a weld.

8. The method according to claim 7, wherein the step of creating the welding boundary information comprises:

- a step of determining a central position of the sensor and a boundary position of the weld using surface waves.

9. A device for inspecting an inspection object using ultrasonic waves, comprising:

- a sensor (2), wherein the sensor is an array probe
- a controller (4);
- a flaw detector (3) configured, under the control of the controller (4), to selectively provide pulse voltages to elements of the array probe so that ultrasonic waves can be transmitted, and to selectively receive reflected waves so that waveform data can be recorded;
- an analyzer (9);
- a display unit (16) configured to show an analysis result;

wherein the analyzer (9) comprises:

- a storage unit (10) configured to store a numerical analysis algorithm;
- a propagation analysis unit (12) configured to analyze respective ultrasonic propagation times from a predetermined reflected signal to respective ultrasound transmission positions by using the numerical analysis algorithm, the propagation analysis unit (12) being configured to conduct a propagation analysis to obtain respective ultrasonic propagation times from a significant reflected signal, which is detected from a flaw detection image created from recorded ultrasonic waveforms, to respective ultrasonic wave transmission positions;
- a model creation unit (11) configured to create an analysis region and an analysis condition when conducting a propagation analysis or a time-reversal propagation analysis, the model creation unit (11) being configured to create a time-reversal propagation analysis model for analyzing propagation of ultrasonic waves to the inspection object by using, as input, delay times of delay time information of the ultrasonic wave transmission positions obtained from the propagation times and waveforms obtained by time-reversing the recorded ultrasonic waveforms;
- a time-reversal propagation analysis unit (13) configured to conduct a time-reversal propagation analysis on the time-reversal propagation analysis model created by the model creation unit (11); and
- an analysis result evaluation unit (14) configured to evaluate a result of the time-reversal propagation analysis and to determine whether the time-reversal propagation analysis is conducted again.

10. The device according to claim 9, wherein a controller (4) comprises an operation selection unit (18) configured to select an analysis algorithm, and the analyzer (9) comprises a storage unit (10) configured to store a plurality of numerical analysis algorithms as analysis algorithms.

11. The device according to claim 9 or 10, wherein

the storage unit (10) stores a synthetic aperture algorithm, and
the analyzer (9) comprises:

- a synthetic aperture processing unit (19) configured to perform synthetic aperture processing using the recorded waveforms; and
- a synthesis result evaluation unit (20) configured to evaluate a result of the synthetic processing and to determine whether a time-reversal propagation analysis is conducted.

**Patentansprüche**

1. Verfahren zum Untersuchen eines Untersuchungsobjekts unter Verwendung von Ultraschallwellen, das Folgendes umfasst:

- einen Schritt (S004; S104; S204; S304) des Erzeugens eines ersten Fehlerdetektionsbildes aus aufgezeichneten Ultraschallsignalformen;
- einen Schritt (S005; S105; S205; S305) des Detektierens eines signifikanten reflektierten Signals aus dem ersten Fehlerdetektionsbild;
- einen Schritt (S008; S110; S208) des Ausführens einer Ausbreitungsanalyse, um jeweilige Ultraschallausbreitungszeiten aus dem signifikanten reflektierten Signal zu jeweiligen Ultraschallwellen-Übertragungspositionen zu erhalten;
- einen Schritt des Erhaltens von Verzögerungszeitinformationen der Ultraschallwellen-Übertragungspositionen aus den Ausbreitungszeiten;

- einen Schritt (S009; S111; S209) des Erzeugens eines Zeitumkehrungs-Ausbreitungsanalysemodells zum Analysieren der Ausbreitung von Ultraschallwellen zu dem Untersuchungsobjekt unter Verwendung der Verzögerungszeiten und von Signalformen, die durch Zeitumkehrung der aufgezeichneten Ultraschallsignalformen erhalten werden, als Eingang; und

- einen Schritt (S011; S113; S211) des Erzeugens eines zweiten Fehlerdetektionsbildes aus einem Ergebnis, das durch Ausführen (S010; S112; S210) einer Zeitumkehrungs-Ausbreitungsanalyse an dem Zeitumkehrungs-Ausbreitungsanalysemodell erhalten wird.

2. Verfahren nach Anspruch 1, wobei der Schritt des Erzeugens des ersten Bildes Folgendes umfasst:

- einen Schritt (S002; S102) des Erzeugens eines ersten Zeitumkehrungs-Ausbreitungsanalysemodells zum Analysieren der Ausbreitung von Ultraschallwellen zu dem Untersuchungsobjekt unter Verwendung von Signalformen, die durch Zeitumkehrung der aufgezeichneten Ultraschallsignalformen erhalten werden, als Eingang; und

- einen Schritt (S004; S104) des Ausgebens eines Ergebnisses, das durch Ausführen (S003; S103) einer Zeitumkehrungs-Ausbreitungsanalyse an dem erstem Zeitumkehrungs-Ausbreitungsanalysemodell erhalten wird.

3. Verfahren nach Anspruch 1, wobei der Schritt des Erzeugens des ersten Bildes Folgendes umfasst:

- einen Schritt des Auswählens eines Algorithmus A zur numerischen Analyse;

- einen Schritt (S102) des Erzeugens eines Zeitumkehrungs-Ausbreitungsanalysemodells zum Analysieren der Ausbreitung von Ultraschallwellen zu dem Untersuchungsobjekt unter Verwendung von Signalformen, die durch Zeitumkehrung der aufgezeichneten Signalformen erhalten werden, als Eingang; und

- einen Schritt (S104) des Ausgebens eines Ergebnisses, das durch Ausführen einer Zeitumkehrungs-Ausbreitungsanalyse unter Verwendung des Algorithmus A zur numerischen Analyse an dem Zeitumkehrungs-Ausbreitungsanalysemodell erhalten wird, und wobei

der Schritt des Ausführens der Ausbreitungsanalyse Folgendes umfasst:

- einen Schritt (S107, S108), in dem ein Algorithmus zur numerischen Analyse, der von dem Algorithmus A zur numerischen Analyse verschieden ist, ausgewählt werden kann;

- einen Schritt (S109) des Erzeugens eines Ausbreitungsanalysemodells, um jeweilige Ultraschallausbreitungszeiten aus dem signifikanten reflektierten Signal zu jeweiligen Ultraschallwellen-Übertragungspositionen zu erhalten; und

- einen Schritt (S110) des Ausführen der Ausbreitungsanalyse unter Verwendung des Algorithmus zur numerischen Analyse, der von dem Algorithmus A zur numerischen Analyse verschieden ist.

4. Verfahren nach Anspruch 1, wobei der Schritt des Erzeugens des ersten Fehlerdetektionsbildes Folgendes umfasst:

- einen Schritt (S202) des Auswählens eines Algorithmus für künstliche Apertur; und

- einen Schritt (S204) des Ausgebens eines Ergebnisses, das durch Ausführen (S203) der Verarbeitung für künstliche Apertur unter Verwendung der aufgezeichneten Signalformen erhalten wird.

5. Verfahren nach einem der Ansprüche 1 bis 4, wobei das signifikante reflektierte Signal ein Schritt des Berechnens von Ausbreitungszeiten von einer vorher angenommenen Position zu den jeweiligen Elementpositionen ist, wobei die vorher angenommene Position eine Position ist, für die vorher angenommen wurde, dass von ihr eine signifikante Reflexion detektiert wird.

6. Verfahren nach einem der Ansprüche 1 bis 5, das ferner Folgendes umfasst:

- einen Schritt des Erzeugens eines Modells, wobei der Schritt des Erzeugens des Modells Folgendes umfasst:

- einen Schritt (S401) des Erfassens einer räumlichen Beziehung zwischen dem Sensor und dem Untersuchungsobjekt;

- einen Schritt (S402) des Einstellens eines Analysebereichs des Untersuchungsobjekts;

- einen Schritt (S403) des Einstellens von Materialdaten des Untersuchungsobjekts;

- einen Schritt (S404) des Einstellens einer Struktur des Sensors und eines Analysebereichs eines Keils; und

- einen Schritt (S405) des Einstellens einer Struktur des Sensors und von Materialdaten des Keils.

7. Verfahren nach Anspruch 6, wobei der Schritt des Erzeugens des Modells Folgendes umfasst:

- einen Schritt (S406) des Einstellens von Schweißgrenzeninformationen; und
- einen Schritt (S407) des Einstellens von Materialdaten einer Schweißnaht.

**8.** Verfahren nach Anspruch 7, wobei der Schritt des Erzeugens der Schweißgrenzeninformationen Folgendes umfasst:

- einen Schritt des Bestimmens einer Mittelposition des Sensors und einer Grenzposition der Schweißnaht unter Verwendung von Oberflächenwellen.

**9.** Vorrichtung zum Untersuchen eines Untersuchungsobjekts unter Verwen-dung von Ultraschallwellen, die Folgendes umfasst:

- einen Sensor (2), wobei der Sensor eine Matrixsonde ist;
- eine Steuereinheit (4);
- einen Fehlerdetektor (3), der konfiguriert ist, unter der Steuerung der Steuereinheit (4) wahlweise Pulsspannungen für Elemente der Matrixsonde bereitzustellen, so dass Ultraschallwellen übertragen werden können und wahlweise reflektierte Wellen zu empfangen, so dass Signalformdaten aufgezeichnet werden können;
- einen Analysator (9);
- eine Anzeigeeinheit (16), die konfiguriert ist, ein Analyseergebnis zu zeigen;

wobei der Analysator (9) Folgendes umfasst:

- eine Speichereinheit (10), die konfiguriert ist, einen Algorithmus zur numerischen Analyse zu speichern;
- eine Ausbreitungsanalyseeinheit (12), die konfiguriert ist, jeweilige Ultraschallausbreitungszeiten aus einem vorgegebenen reflektierten Signal zu jeweiligen Ultraschallübertragungspositionen unter Verwendung des Algorithmus zur numerischen Analyse zu analysieren, wobei die Ausbreitungsanalyseeinheit (12) konfiguriert ist, eine Ausbreitungsanalyse auszuführen, um jeweilige Ultraschallausbreitungszeiten aus einem signifikanten reflektierten Signal, das aus einem aus aufgezeichneten Ultraschallsignalformen erzeugten Fehlerdetektionsbild detektiert wird, zu jeweiligen Ultraschallwellen-Übertragungspositionen zu erhaltern;
- eine Modellerzeugungseinheit (11), die konfiguriert ist, einen Analysebereich und eine Analysebedingung zu erzeugen, wenn eine Ausbreitungsanalyse oder eine Zeitumkehrungs-Ausbreitungsanalyse ausgeführt wird, wobei die Modellerzeugungseinheit (11) konfiguriert ist, ein Zeitumkehrungs-Ausbreitungsanalysemodell zum Analysieren der Ausbreitung von Ultraschallwellen zu dem Untersuchungsobjekt unter Verwendung als Eingang von Verzögerungszeiten von Verzögerungszeitinformationen der Ultraschallwellen-Übertragungspositionen, die aus den Ausbreitungszeiten und aus Signalformen erhalten werden, die durch Zeitumkehrung der aufgezeichneten Ultraschallsignalformen erhalten werden, zu erzeugen;
- eine Zeitumkehrungs-Ausbreitungsanalyseeinheit (13), die konfiguriert ist, eine Zeitumkehrungs-Ausbreitungsanalyse an dem Zeitumkehrungs-Ausbreitungsanalysemodell, das durch die Modellerzeugungseinheit (11) erzeugt wird, auszuführen; und
- eine Analyseergebnis-Bewertungseinheit (14), die konfiguriert ist, ein Ergebnis der Zeitumkehrungs-Ausbreitungsanalyse zu bewerten und zu bestimmen, ob die Zeitumkehrungs-Ausbreitungsanalyse erneut ausgeführt wird.

**10.** Vorrichtung nach Anspruch 9, wobei eine Steuereinheit (4) eine Betriebsauswahleinheit (18) umfasst, die konfiguriert ist, einen Analysealgorithmus auszuwählen, und der Analysator (9) eine Speichereinheit (10) umfasst, die konfiguriert ist, mehrere Algorithmen zur numerischen Analyse als Analysealgorithmen zu speichern.

**11.** Vorrichtung nach Anspruch 9 oder 10, wobei die Speichereinheit (10) einen Algorithmus für künstliche Apertur speichert und der Analysator (9) Folgendes umfasst:

- eine Einheit (19) zum Verarbeiten einer künstlichen Apertur, die konfiguriert ist, eine Verarbeitung für künstliche Apertur unter Verwendung der aufgezeichneten Signalformen auszuführen; und
- eine Einheit (20) zum Bewerten eines Syntheseergebnisses, die konfiguriert ist, ein Ergebnis der synthetischen Verarbeitung zu bewerten und zu bestimmen, ob die Zeitumkehrungs-Ausbreitungsanalyse ausgeführt wird.

**Revendications**

**1.** Procédé pour inspecter un objet à inspecter en utilisant des ondes ultrasonores, comprenant :

- une étape (S004 ; S104 ; S204 ; S304) consistant à créer une première image de détection de défauts à partir de formes d'ondes ultrasonores enregistrées ;
- une étape (S005 ; S105 ; S205 ; S305) consistant à détecter un signal réfléchi significatif depuis la première image de détection de défauts ;
- une étape (S008 ; S110 ; S208) consistant à mener une analyse de propagation pour obtenir des temps de propagation ultrasonore respectifs à partir du signal réfléchi significatif à des positions de transmission d'ondes ultrasonores respectives ;
- une étape consistant à obtenir une information temporelle de retard des positions de transmission d'ondes ultrasonores à partir des temps de propagation ;
- une étape (S009 ; S111 ; S209) consistant à créer un modèle d'analyse de propagation à retournement temporel pour analyser la propagation des ondes ultrasonores vers l'objet à inspecter en utilisant, à titre d'entrée, les temps de retard et les formes d'ondes obtenu(e)s par retournement temporel des formes d'ondes ultrasonores enregistrées ; et
- une étape (S011 ; S113 ; S211) consistant à créer une seconde image de détection de défauts à partir d'un résultat obtenu en menant (S010 ; S111 ; S210) une analyse de propagation à retournement temporel sur le modèle d'analyse de propagation à retournement temporel.

2. Procédé selon la revendication 1, dans lequel l'étape consistant à créer la première image comprend :

- une étape (S002 ; S102) consistant à créer un premier modèle d'analyse de propagation à retournement temporel pour analyser la propagation des ondes ultrasonores vers l'objet à inspecter en utilisant, à titre d'entrée, des formes d'ondes obtenues par retournement temporel des formes d'ondes ultrasonores enregistrées ; et
- une étape (S004 ; S104) consistant à délivrer un résultat obtenu en menant (S003 ; S103) une analyse de propagation à retournement temporel sur le premier modèle d'analyse de propagation à retournement temporel.

3. Procédé selon la revendication 1, dans lequel l'étape consistant à créer la première image comprend :

- une étape consistant à sélectionner un algorithme d'analyse numérique A ;
- une étape (S102) consistant à créer un modèle d'analyse de propagation à retournement temporel pour analyser la propagation des ondes ultrasonores vers l'objet à inspecter en utilisant, à titre d'entrée, des formes d'ondes obtenues par retournement temporel des formes d'onde enregistrées ; et
- une étape (S104) consistant à délivrer un résultat obtenu en menant une analyse de propagation à retournement temporel en utilisant l'algorithme d'analyse numérique A sur le modèle d'analyse de propagation à retournement temporel, et dans lequel

l'étape consistant à mener l'analyse de propagation comprend :

- une étape (S107, S108) dans lequel un algorithme d'analyse numérique autre que l'algorithme d'analyse numérique A peut être sélectionné ;
- une étape (S109) consistant à créer un modèle d'analyse de propagation pour obtenir des temps de propagation ultrasonore respectifs à partir du signal réfléchi significatif vers des positions de transmission d'ondes ultrasonores respectives ; et
- une étape (S110) consistant à mener l'analyse de propagation en utilisant l'algorithme d'analyse numérique autre que l'algorithme d'analyse numérique A.

4. Procédé selon la revendication 1, dans lequel l'étape consistant à créer la première image de détection de défauts comprend :

- une étape (S202) consistant à sélectionner un algorithme d'ouverture synthétique ; et
- une étape (S204) consistant à délivrer un résultat obtenu en exécutait (S203) un traitement d'ouverture synthétique en utilisant les formes d'ondes enregistrées.

5. Procédé selon l'une quelconque des revendications 1 à 4, dans lequel le signal réfléchi significatif est une étape consistant à calculer des temps de propagation à partir d'une position précédemment supposée vers les positions élémentaires respectives, la position précédemment supposée étant une position à partir de laquelle on suppose qu'une réflexion significative est précédemment détectée.

6. Procédé selon l'une quelconque des revendications 1 à 5, comprenant en outre :

- une étape consistant à créer un modèle, dans lequel l'étape consistant à créer le modèle comprend :
- une étape (S401) consistant à acquérir une relation de position entre le capteur et l'objet à inspecter ;
- une étape (S402) consistant à définir une région d'analyse de l'objet à inspecter ;
- une étape (S403) consistant à définir des données matérielles de l'objet à inspecter ;
- une étape (S404) consistant à définir une structure du capteur et une région d'analyse d'un coin ; et
- une étape (S405) consistant à définir une structure du capteur et des données matérielles du coin.

7. Procédé selon la revendication 6, dans lequel l'étape consistant à créer le modèle comprend :

   - une étape (S406) consistant à définir une information de frontière de soudage ; et
   - une étape (S407) consistant à définir des données matérielles d'une soudure.

8. Procédé selon la revendication 7, dans lequel l'étape consistant à créer l'information de frontière de soudage comprend :

   - une étape consistant à déterminer une position centrale du capteur et une position frontière de la soudure en utilisant des ondes de surface.

9. Dispositif pour inspecter un objet à inspecter en utilisant des ondes ultrasonores, comprenant :

   - un capteur (2), dans lequel le capteur est une sonde en réseau ;
   - un contrôleur (4) ;
   - un détecteur de défauts (3) configuré, sous la commande du contrôleur (4) pour fournir sélectivement des voltages en impulsions à des éléments de la sonde en réseau de telle façon que des ondes ultrasonores peuvent être transmises, et pour recevoir sélectivement des ondes réfléchies de telle sorte que des données de formes d'ondes peuvent être enregistrées ;
   - un analyseur (9) ;
   - une unité d'affichage (16) configurée pour présenter un résultat d'analyse ;

   dans lequel l'analyseur (9) comprend :

   - une unité de stockage (10) configurée pour stocker un algorithme d'analyse numérique ;
   - une unité d'analyse de propagation (12) configurée pour analyser des temps de propagation ultrasonore respectifs à partir d'un signal réfléchi prédéterminé à des positions de transmission ultrasonore respectives en utilisant l'algorithme d'analyse numérique, l'unité d'analyse de propagation (12) étant configurée pour mener une analyse de propagation afin d'obtenir des temps de propagation ultrasonore respectifs à partir d'un signal réfléchi significatif, qui est détecté à partir d'une image de détection de défauts créée à partir de formes d'ondes ultrasonores enregistrées à des positions de transmission d'ondes ultrasonores respectives ;
   - une unité de création de modèle (11) configurée pour créer une région d'analyse et une condition d'analyse lorsqu'on mène une analyse de propagation pour une analyse de propagation à retournement temporel, l'unité de création de modèle (11) étant configurée pour créer un modèle d'analyse de propagation à retournement temporel pour analyser la propagation des ondes ultrasonores vers l'objet à inspecter en utilisant, à titre d'entrée, les temps de retard de l'information temporelle de retard des positions de transmission d'ondes ultrasonores obtenues à partir des temps de propagation et les formes d'ondes obtenues par retournement temporel des formes d'ondes ultrasonores enregistrées ;
   - une unité d'analyse de propagation à retournement temporel (13) configurée pour mener une analyse de propagation à retournement temporel sur le modèle analyse de propagation à retournement temporel créé par l'unité de création de modèle (11) ; et
   - une unité d'évaluation de résultat d'analyse (14) configurée pour évaluer un résultat de l'analyse de propagation à retournement temporel et pour déterminer si l'analyse de propagation à retournement temporel est à nouveau menée.

10. Dispositif selon la revendication 9, dans lequel un contrôleur (4) comprend une unité de sélection opérationnelle (18) configurée pour sélectionner un algorithme d'analyse, et l'analyseur (9) comprend une unité de stockage (10) configurée pour stocker une pluralité d'algorithmes d'analyse numérique à titre d'algorithmes d'analyse.

11. Dispositif selon la revendication 9 ou 10, dans lequel l'unité de stockage (10) stocke un algorithme d'ouverture synthétique, et l'analyseur (9) comprend :

   - une unité de traitement d'ouverture synthétique (19) configurée pour exécuter un traitement d'ouverture synthétique utilisant les formes d'ondes enregistrées ; et
   - une unité d'évaluation de résultat de synthèse (20) configurée pour évaluer un résultat du traitement synthétique et pour déterminer si une analyse de propagation à retournement temporel est menée.

## FIG. 1

CONTROLLER 4

CONTROL UNIT 6

POSITION DETECTION UNIT 5

ELEMENT SELECTION UNIT 7

SIGNAL PROCESSING UNIT 8

FLAW DETECTOR 3

PULSER/RECEIVER

SENSOR 2

SENSOR CENTER (0)

DRIVE MECHANISM 17

SCANNING ORBIT

INSPECTION OBJECT

SENSOR CENTER IN DETECTION POSITION (0a)

ANALYZER 9

PROPAGATION ANALYSIS UNIT 12

STORAGE UNIT 10

MODEL CREATION UNIT 11

TIME-REVERSAL PROPAGATION ANALYSIS UNIT 13

ANALYSIS RESULT EVALUATION UNIT 14

DISPLAY 15

LOAD IN ELEMENT POSITION (RECORDED WAVEFORM)

DISPLAY UNIT 16

WELDER

(0a)

EP 2 985 600 B1

# FIG. 2

S000 — START INSPECTION

S001 — RECORD WAVEFORMS

S002 — CREATE TIME-REVERSAL PROPAGATION ANALYSIS MODEL-1

S003 — CONDUCT TIME-REVERSAL PROPAGATION ANALYSIS

S004 — OUTPUT ANALYSIS RESULT

S005 — IS SIGNIFICANT SIGNAL DETECTED ?

YES

NO

S006 — IS ANALYSIS NEEDED AGAIN ?

NO

YES

S007 — CREATE PROPAGATION ANALYSIS MODEL

S008 — CONDUCT PROPAGATION ANALYSIS

S009 — CREATE TIME-REVERSAL PROPAGATION ANALYSIS MODEL-2

S010 — CONDUCT TIME-REVERSAL PROPAGATION ANALYSIS

S011 — OUTPUT ANALYSIS RESULT

S013

S012 — END INSPECTION

EP 2 985 600 B1

# FIG. 3

| RECORDING (MEASUREMENT) OF WAVEFORM | ANALYSIS (ON PC) | OUTPUT |
|---|---|---|

S001 ARRAY PROBE AND N NUMBER OF ELEMENTS
WEDGE (SHOE)
WELDER (ACOUSTICALLY ANISOTROPIC)
DEFECT
BASE MATERIAL (ISOTROPIC)
ELEMENT POSITION K

TRANSMIT/RECEIVE BY ELEMENTS FORMING ARRAY PROBE AND RECORD WAVEFORMS $\Phi_K$

S002,S003 ANALYSIS REGION MESH
ASSUME ISOTROPY

PROVIDE CREATED LOADING CONDITIONS $I_K(t)$ TO EACH ELEMENT POSITION AND CONDUCT TIME REVERSAL PROPAGATION ANALYSIS

S007,S008
PROVIDE ACOUSTIC ANISOTROPY INFORMATION

PROVIDE ACOUSTIC ANISOTROPY INFORMATION TO ANALYSIS REGION, CONDUCT PROPAGATION ANALYSIS. DETECT ANALYSIS WAVEFORM AT EACH ELEMENT POSITION, CALCULATE PROPAGATION TIME FROM SITE SX TO EACH ELEMENT, AND CALCULATE DELAY TIME $d_K$

S009,S010
PROVIDE ACOUSTIC ANISOTROPY INFORMATION

PROVIDE, TO EACH ELEMENT POSITION, LOADING CONDITIONS $I_K(t)\cdot D(d_K)$ CONSIDERING DELAY TIME AND CONDUCT TIME-REVERSAL PROPAGATION ANALYSIS AGAIN

S004,S005 ANALYSIS REGION

S006 SIGNIFICANT SIGNAL S

SITE SX HAVING HIGHEST SIGNAL STRENGTH IN SIGNIFICANT SIGNAL S

PROVIDE, TO SITE AX, LOADING CONDITIONS GENERATED BY SIMILATING POINT SOURCE

(S013)

S011

SIGNIFICANT SIGNAL S' WHOSE ACCURACY HAS BEEN INCREASED

S002, S003 : TIME-REVERSAL PROPAGATION ANALYSIS MODEL 1
S007, S008 : PROPAGATION ANALYSIS MODEL
S009, S010 : TIME-REVERSAL PROPAGATION ANALYSIS MODEL 2

18

# FIG. 4

EP 2 985 600 B1

# FIG. 5

```
                                                          S100
                                    START INSPECTION

                                                          S101
                                    RECORD WAVEFORMS

                                                          S102
                                    CREATE TIME-REVERSAL
                                    PROPAGATION ANALYSIS
                                          MODEL-1

                                                          S103
                                    CONDUCT TIME-REVERSAL
                                    PROPAGATION ANALYSIS

                                                          S104
                                       OUTPUT ANALYSIS
                                        RESULT IMAGE

                                                          S105
                    YES                 IS SIGNIFICANT
                                      SIGNAL DETECTED ?

                                                             NO
        S106
                    IS ANALYSIS        NO
                   NEEDED AGAIN ?

                        YES
        S107
        YES         NECESSARY TO
                  SELECT ALGORITHM
                       AGAIN ?

                                    NO
   S108              S109
   SELECT ANOTHER    CREATE PROPAGATION
     ALGORITHM       ANALYSIS MODEL

                    CONDUCT PROPAGATION
        S110            ANALYSIS

                    CREATE TIME-REVERSAL
        S111        PROPAGATION ANALYSIS       S115
                          MODEL-2

        S112        CONDUCT TIME-REVERSAL
                    PROPAGATION ANALYSIS

        S113          OUTPUT IMAGE OF
                     ANALYSIS RESULT
                                                          S114
                                       END INSPECTION
```

FIG. 6

# FIG. 7

START INSPECTION — S200

RECORD WAVEFORMS — S201

SELECT SYNTHETIC APERTURE ALGORITHM — S202

PERFORM SYNTHETIC APERTURE PROCESSING — S203

OUTPUT IMAGE OF SYNTHETIC APERTURE PROCESSING RESULT — S204

IS SIGNIFICANT SIGNAL DETECTED ? — S205
YES / NO

S206 — IS ANALYSIS NEEDED ?
YES / NO

S207 — CREATE PROPAGATION ANALYSIS MODEL

S208 — CONDUCT PROPAGATION ANALYSIS

S209 — CREATE TIME-REVERSAL PROPAGATION ANALYSIS MODEL

S213

S210 — CONDUCT TIME-REVERSAL PROPAGATION ANALYSIS

S211 — OUTPUT IMAGE OF ANALYSIS RESULT

END INSPECTION — S212

# FIG. 8

```
                                    ┌─────────────────────┐  ⟋ S300
                                    │   START INSPECTION  │
                                    └─────────────────────┘  ⟋ S301
                                    ┌─────────────────────┐
                                    │      SENSOR IN      │
                                    │  INITIAL POSITION   │
                                    └─────────────────────┘  ⟋ S302
                                    ┌─────────────────────┐
                                    │  TRANSMIT/RECEIVE   │◄────────────┐
                                    │     ULTRASOUND      │             │
                                    └─────────────────────┘  ⟋ S303     │
                                    ┌─────────────────────┐             │
                                    │  RECORD WAVEFORMS   │             │
                                    └─────────────────────┘  ⟋ S304     │
                                    ┌─────────────────────┐   ⟋ S308    │
                                    │ OUTPUT/STORE  IMAGE │  ┌──────────────┐
                                    │  BASED ON INITIALLY │  │ MOVE SENSOR  │
                                    │ SELECTED ALGORITHM  │  └──────────────┘
                                    └─────────────────────┘             │
                        YES              ◇ IS SIGNIFICANT ◇  ⟋ S305     │
                                          SIGNAL DETECTED ?             │
S306                                                                    │
┌──────────────────────┐                      NO                       │
│ CREATE DETAILED MODEL │                                              │
│ AND OUTPUT RESULT USING│                     ⟋ S307         NO       │
│  ANALYSIS ALGORITHM   │          ◇ ARE ALL REGIONS ◇ ──────────────┘
└──────────────────────┘             INSPECTED ?
                                          YES         ⟋ S309
                                    ┌─────────────────────┐
                                    │   END INSPECTION    │
                                    └─────────────────────┘
```

## FIG. 9

S400
START TO CREATE MODEL

S401
ACQUIRE POSITIONAL
RELATIONSHIP

S402
SET REGION OF
EXAMINATION OBJECT

S403
SET MATERIAL DATA OF
INSPECTION OBJECT

S404
SET REGION OF
SENSOR/WEDGE

S405
SET MATERIAL DATA
OF SENSOR/WEDGE

# FIG. 10

S401
ACQUIRE POSITIONAL
RELATIONSHIP
BETWEEN SENSOR
AND INSPECTION
OBJECT

SENSOR

SENSOR CENTER (0)

DRIVE
MECHANISM

SENSOR CENTER
IN DETECTION
POSITION (0a)

SCANNING ORBIT

INSPECTION OBJECT

S402
SET IMAGING REGION
BASED ON SHAPE DATA
OF INSPECTION OBJECT

SENSOR CENTER IN
DETECTION POSITION (0a)

S403
SET MATERIAL DATA
OF INSPECTION OBJECT

SENSOR CENTER IN
DETECTION POSITION (0a)

A: DENSITY

B: · · ·

S404
SET ELEMENT POSITION
AND REGION OF
BACKING/WEDGE

S405
SET MATERIAL DATA
OF BACKING/WEDGE

ABSORPTION BOUNDARY

ELEMENT
POSITION

ENTIRE ANALYSIS
REGION

25

# FIG. 11

START TO CREATE MODEL — S400

ACQUIRE POSITIONAL RELATIONSHIP — S401

SET REGION OF SUBJECT — S402

SET MATERIAL DATA OF EXAMINATION OBJECT — S403

SET REGION OF SENSOR/WEDGE — S404

SET MATERIAL DATA OF SENSOR/WEDGE — S405

SET WELDING BOUNDARY INFORMATION — S406

SET MATERIAL DATA OF WELDER — S407

# FIG. 12

S406
SET WELDING BOUNDARY
(WELDER B+C+D)

S407
SET DETAILED
MATERIAL DATA
AND CREATE MODEL

ELEMENT
POSITION

ABSORBING BOUNDARY

ENTIRE ANALYSIS
REGION

# FIG. 13

ARRAY PROBE

SURFACE WAVE

21

SECTIONAL VIEW

REFLECTED WAVE

WELDING BOUNDARY

WELDING BOUNDARY

←Yd→

WELDER

TOP VIEW

REFLECTED WAVE

WELD LINE (B)

WELD LINE (A)

# FIG. 14

ELEMENT PITCH:P

ARRAY PROBE   ELEMENT

IN-WEDGE SONIC VELOCITY:Vw

SURFACE WAVE

REFLECTION SOURCE

P·tan θ

21

SLOPE OF WEDGE: θ   P/cos θ

SONIC VELOCITY OF TRANSVERSE WAVE IN INSPECTION OBJECT:Vs

# FIG. 15

HEIGHT
[%]

$\phi_A(t)$

TIME

(A) WAVEFORM RECORDED USING CERTAIN ELEMENT A

⇩

$$I_A(t) = \alpha \cdot \phi_A(T-t)$$

TIME

(B) LOADING CONDITIONS CREATED BASED ON
WAVEFORM RECORDED USING CERTAIN ELEMENT A

# FIG. 16

(a) IMAGE AT TIME t

(b) IMAGE AT TIME t+Δt

(c) IMAGE AT TIME t+2Δt

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6719693 B

### Non-patent literature cited in the description

- **S. PUDOVIKOV ; A. BULAVINOV ; M. KRONING.** *Ultrasonic inspectability of austenitic stainless steel and dissimilar metal weld joints*
- **KAZUYUKI NAKAHATA ; KAZUSHI KIMOTO.** An approach of ultrasonic flaw imaging in heterogeneous material with array transducer. *National Congress of Theoretical and Applied Mechanics,* March 2011
- **MATHIAS FINK.** Time Reversal of Ultrasonic Fields-Part I: Basic Principles. *IEEE TRANSACTIONS ON ULTRASONICS, FERROELECTRICS, AND FREQUENCY CONTROL,* September 1992, vol. 39 (5
- **NAJET CHAKROUN ; MATHIAS A. FINK ; FRANCOIS WU.** Time Reversal Processing in Ultrasonic Nondestructive Testing. *IEEE TRANSACTIONS ON ULTRASONICS, FERROELECTRICS, AND FREQUENCY CONTROL,* November 1995, vol. 42 (6
- **T. LEUTENEGGER.** *Nondestructive testing of tubes using a time reverse numerical simulation (TRNS) method*